# EUROPEAN PATENT APPLICATION

(11) **EP 3 113 316 A1**
(43) Date of publication of application: **04.01.2017**
(21) Application number: 15751620.4
(22) Date of filing: 24.02.2015
(51) Int. Cl.: H02J 7/00, H02J 50/00, H04R 25/00

(54) **POWER SOURCE DEVICE FOR PORTABLE APPARATUS, PORTABLE APPARATUS, AND CHARGING DEVICE**

(30) Priority: 24.02.2014 JP 2014033094
(71) Applicant: Nitto Denko Corporation, Ibaraki-shi, Osaka 567-8680 (JP)
(72) Inventor: HATANAKA, Takezo, Ibaraki-shi Osaka 567-8680 (JP); TSUDA, Hisashi, Ibaraki-shi Osaka 567-8680 (JP)
(74) Representative: Müller-Boré & Partner Patentanwälte PartG mbB
(86) International application number: PCT/JP2015/055180
(87) International publication number: WO 2015/125965

(57) **Abstract**

This power source device for a portable apparatus has a secondary battery, a circuit board, and an electricity reception module. At the circuit board is mounted a charging/discharging circuit containing a charging circuit for charging the secondary battery by means of the input of external power. The electricity reception module has a power extraction coil and an electricity receiving resonance coil to which power is supplied from outside by means of the resonance phenomenon and then output as external power to the charging circuit. A portion or all of the circuit board and/or secondary battery is disposed at the inside of the power extraction coil and electricity receiving resonance coil of the electricity reception module.

## Description

### TECHNICAL FIELD

The present invention relates to a power source device for a portable device which is used as a power source device for a portable device and a charging device therefor.

### BACKGROUND

There have traditionally been suggested, as a power source device for portable devices, a structure adopting a secondary battery capable of charging and discharging so that no frequent battery-exchanging work is required. For charging a secondary battery are adopted a wired charging system which supplies power through a mechanical contact as described in PTL 1, or a wireless charging system which supplies power by electromagnetic inductance as described in PTL 2 and 3.

### CITATION LIST

### [Patent Literature]

PTL 1: Japanese Unexamined Patent Publication No. H09-50795
PTL 2: Japanese Unexamined Patent Publication No. 2014-7594
PTL 3: Japanese Unexamined Patent Publication No. 2010-207017

### SUMMARY OF THE INVENTION

### Technical Problem

Since a portable device itself is preferred to be small in terms of light weight and portability, a charging device for such a portable device is also typically small to meet the size of the portable device. This condition for the charging device specific to portable devices is taken into account in various structures suggested. If there are other conditions that should be taken into account, suggestions of structures taking into account these conditions are desired.

An object of the present invention is to provide a power source device for a portable device, a portable device, and a charging device which contribute to downsizing of portable devices.

### TECHNICAL SOLUTION

To achieve the above object, a first aspect of the present invention is a power source device for a portable device, including: a secondary battery; a circuit board on which a charging circuit is mounted, the charging circuit configured to charge the secondary battery with an input of external power; and a power-receiving module having a power-receiving resonance coil and a power-drawing coil, which are configured to receive power supplied from outside by a resonance phenomenon and output to the charging circuit as the external power, wherein at least one of the circuit board and the secondary battery is at least partially arranged on an inner circumference side of the power-receiving resonance coil and the power-drawing coil in the power-receiving module.

The above structure allows downsizing of a power source device for a portable device by arranging, at least partially, at least one of the circuit board and the secondary battery on an inner circumference side of the power-receiving resonance coil and the power-drawing coil in the power-receiving module. Thus, downsizing of the portable device is possible.

Further traditionally, regarding a power source devices for a portable device, the portable device is preferred to be small in terms of light weight and portability. Therefore, a charging device typically has a small size to fit with the size of the portable device. For a secondary battery in such a power source device for a portable device, an electromagnetic inductance charging system is adopted in general, which facilitates designing of a transmission distance to the order of several millimeters from the charging device and enables a high transmission efficiency at a short distance. Therefore, it has been out of the common practice of the technical field of the power source device to adopt, as the charging system for power source device for a portable device, a magnetic resonance charging system utilizing a resonance phenomenon, which system has been collecting attention, despite its lower transmission efficiency as compared with the electro magnetic inductance, for its ability to transmit power over a long transmission distance of the order of several meters.

However, as a result of various studies and experiments, the inventors of the present invention found that adopting the magnetic resonance system utilizing a resonance phenomenon brings about characteristics unattainable by the electromagnetic inductance system, and that these characteristics improves matters required in the power source devices for portable devices.

More specifically, the inventors have found that a resonance phenomenon forms a magnetic field space with a smaller magnetic field strength than the other, in a nearby position, on the inner circumference side or the outer circumferential side, of the power-receiving module. The power source device for a portable device enables formation of the magnetic field space in a position where the charging circuit and the like is arranged. Therefore, it is possible to make the power source device for a portable device smaller than that adopting the electromagnetic inductance.

Further, the inventors have found that the load fluctuation characteristic with respect to the charging time in a constant voltage charging is adjustable by adjusting the value of the coupling coefficient between the power-receiving module and a coil of a power-supplying module configured to supply an external power to the power-receiving module. This restrains input of excessive external power at the time of transition from the constant current charging to the constant voltage charging, without a need of separately providing an impedance matching box. As the impedance matching box is no longer needed, downsizing of the power source device for a portable device is possible.

The first aspect of the present invention may be adapted so that at least a part of the circuit board is arranged in a magnetic field space formed by the resonance phenomenon so as to have a smaller magnetic field strength than those of the other parts.

In the above structure, a space part having a small magnetic field is generated at around the power-receiving module, and this space part is effectively used as the arrangement location of at least a part of the circuit substrate. This allows an arrangement position for the charging circuit to be easily ensured in a power source device for a portable device, with limited space for arranging components, and further enables downsizing of the power source device for a portable device.

The first aspect of the present invention may be adapted so that the circuit board is a part of a support structure for components arranged inside the power source device for a portable device.

The above structure in which the circuit board substitutes for a part of the support structure allows further downsizing and weight reduction of the power source device for a portable device.

The first aspect of the present invention may be adapted so that the power-receiving module is configured to hold the secondary battery in a detachable manner.

The above structure enables use of the power-receiving module as a battery holder for the secondary battery, which further contributes to reduction of the number of the components.

A second aspect of the present invention is a portable device including any of the power source devices for a portable device, related to the first aspects.

The above structure enables downsizing of a portable device.

The second aspect of the present invention may be a human-wearable device including any of the above-described power source device for a portable device related to the first aspect.

The above structure enables downsizing of a human-wearable device as a portable device, and downsizing the power source device for a portable device improves the degree of freedom in the shape and size of the human-wearable device, which contributes to reduction of burdens in manufacturing such a device in a shape and size that fit to the physique and body shape of a user.

The second aspect of the present invention may be a hearing aid to be worn on an ear, including any of the above-described power source device for a portable device related to the first aspect.

The above structure enables downsizing of a hearing aid as a portable device, and downsizing the power source device for a portable device improves the degree of freedom in the shape and size of the hearing aid, which contributes to reduction of burdens in manufacturing the hearing aid in a shape that fits to the shape of the ear of a user.

Further, a third aspect of the present invention is a charging device which is attachable to the portable device of the second aspect, the charging device configured to supply external power to a power source device of the portable device attached, comprising: a power-supplying module configured to supply power to the power-receiving module by using a resonance phenomenon, the power-supplying module including a power-supplying resonance coil and a power-supplying coil; and a casing formed so that, while the portable device is attached, the power-supplying module and the power-receiving module are in a positional relation such that their coil axes match with each other.

In the above structure, the casing is formed so that, while the portable device is attached, the power-supplying module and the power-receiving module are in a positional relation such that their coil axes match with each other. This enables charging as intended in the design, with respect to the power source device for a portable device, simply by placing the portable device on the charging device. There is no need of warning the user regarding how the portable device should be placed on the casing; i.e., the tilt angle and the rotational angle of the tilt axis of the portable device with respect to a contact surface of the casing.

### ADVANTAGEOUS EFFECTS

The present invention at least allows downsizing of portable devices.

### DESCRIPTION OF THE DRAWINGS

[FIG. 1] FIG. 1 is an explanatory diagram of an ear-hook hearing aid having a power source device for a portable device.
[FIG. 2] FIG. 2 is a perspective view of a power source device for a portable device.
[FIG. 3] FIG. 3 is a perspective view of a power source device for a portable device.
[FIG. 4] FIG. 4 is a block diagram of a charging system.
[FIG. 5] FIG. 5 is an explanatory diagram showing how the components of a power source device for a portable device are arranged.
[FIG. 6] FIG. 6 is an explanatory diagram illustrating the ear-hook hearing aid placed on the charging device.
[FIG. 7] FIG. 7 is a perspective view of the charging device.
[FIG. 8A] FIG. 8A is an explanatory diagram showing a secondary battery being set to the power source device for a portable device.
[FIG. 8B] FIG. 8B is an explanatory diagram showing the secondary battery set to the power source device for a portable device.
[FIG. 9A] FIG. 9A is an explanatory diagram showing a secondary battery being set to the power source device for a portable device.
[FIG. 9B] FIG. 9B is an explanatory diagram showing the secondary battery set to the power source device for a portable device.
[FIG. 9C] FIG. 9C is a perspective view of a power source device for a portable device.
[FIG. 9D] FIG. 9D is a perspective view of an ear-hook hearing aid.
[FIG. 9E] FIG. 9E is an explanatory diagram showing directions of attaching or detaching the ear-hook hearing aid with respect to the power source device for a portable device.
[FIG. 10A] FIG. 10A is an explanatory diagram showing a secondary battery being set to the power source device for a portable device.
[FIG. 10B] FIG. 10B is an explanatory diagram showing the secondary battery set to the power source device for a portable device.
[FIG. 10C] FIG. 10C is a perspective view of an ear-hook hearing aid having a power source device for a portable device.
[FIG. 10D] FIG. 10D is a perspective view of an ear-hook hearing aid having a power source device for a portable device.
[FIG. 11] FIG. 11 is a perspective view of an ear hole fitting hearing aid.
[FIG. 12A] FIG. 12A is a perspective view of an ear hole fitting hearing aid.
[FIG. 12B] FIG. 12B is a perspective view of an ear hole fitting hearing aid.
[FIG. 13A] FIG. 13A is an explanatory diagram showing how the components of a power source device for a portable device are arranged.
[FIG. 13B] FIG. 13B is an explanatory diagram showing how the components of a power source device for a portable device are arranged.
[FIG. 13C] FIG. 13C is an explanatory diagram showing how the components of a power source device for a portable device are arranged.
[FIG. 14] FIG. 14 is an explanatory diagram showing a relation between an ear hole fitting hearing aid and a magnetic field space.
[FIG. 15] FIG. 15 is an explanatory diagram showing an arrangement of an air cell of the ear-hook hearing aid and the power source device for a portable device. Description of Embodiments

### (Overview of Power Source Device 10 for Portable Device)

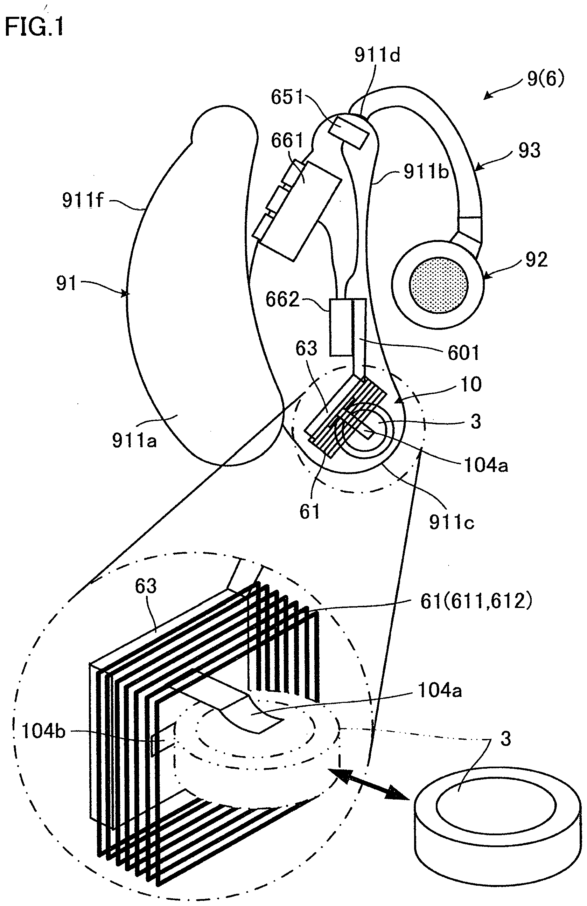

As shown in FIG. 1, a power source device 10 of the present embodiment for a portable device (hereinafter, portable device-use power source device) is configured to charge a secondary battery 3 through a magnetic resonance system utilizing a resonance phenomenon, and has a part of or the entirety of at least one of a circuit board 63 or the secondary battery 3 in an inner circumference side of a power-receiving module 61. The "resonance phenomenon" here is a phenomenon in which two or more coils are tuned to a resonance frequency.

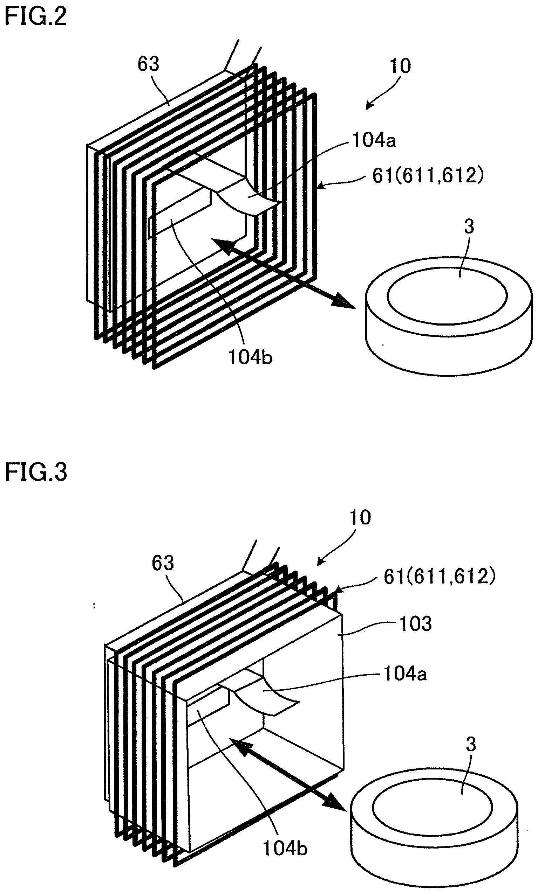

Specifically, as shown in FIG. 2, the portable device-use power source device 10 includes a secondary battery 3, a circuit board 63, and a power-receiving module 61. On the circuit board 63 is mounted a charge/discharge circuit 101 including a charging circuit configured to charge the secondary battery 3 with an input of an external power. The power-receiving module 61 has a power-receiving resonance coil 611 and a power-drawing coil 612, which are configured to receive power supplied from outside by a resonance phenomenon and output to the charging circuit as an external power. At least one of the circuit board 63 and the secondary battery 3 is at least partially arranged on an inner circumference side of the power-receiving resonance coil 611 and the power-drawing coil 612 in the power-receiving module 61.

With this, a portable device-use power source device 10 is made smaller by arranging, at least partially, at least one of the circuit board 63 and the secondary battery 3 on an inner circumference side of the power-receiving module 61, as compared with a structure in which the circuit board 63 and the secondary battery 3 are arranged outer circumference side of the power-receiving module 61. As the result, the portable device-use power source device 10 enables downsizing of portable devices 6 such as an ear-hook hearing aid 9. It should be noted that the power-receiving module 61 may be used as a battery holder for the secondary battery 3. In other words, the power-receiving module 61 may be formed so as to hold the secondary battery 3 in a detachable manner. Further, as shown in FIG. 3, the portable device-use power source device 10 may have a magnetic member 103 disposed along the inner circumferential surface of the power-receiving module 61.

The portable device-use power source device 10, adopting the magnetic resonance system utilizing a resonance phenomenon, allows downsizing by utilizing characteristics that are not obtainable by an electromagnetic inductance system; i.e., a characteristic that a magnetic field space having a smaller magnetic field strength than those of the other parts are formed in a position nearby the inner circumference side or the outer circumference side of the power-receiving module 61; and a characteristic that enables adjustment of the load fluctuation characteristic with respect to the charging time in a constant voltage charging. The magnetic field space and the load fluctuation characteristic are detailed later.

### (Portable Device-Use Power Source Device 10: Secondary Battery 3)

As the secondary battery 3, any type of batteries which are chargeable and rechargeable can be used. Examples of the secondary battery 3 include a lead storage battery, a valve-regulated lead storage battery, a lithium air battery, a lithium ion battery, a lithium ion polymer battery, a lithium iron phosphate ion battery, a lithium-sulfur battery, a lithium titanate battery, a nickel-cadmium storage battery, a nickel-hydrogen rechargeable battery, a nickel-iron battery, a nickel-lithium battery, a nickel-zinc battery, a rechargeable alkali battery, a sodium-sulfur battery, a redox flow battery, a zinc-bromine flow battery, a silicon battery, and a Silver-Zinc battery.

The nominal voltage of the nickel-metal hydride battery is 1.2V to 1.4V as in the case of the nominal voltage of an air cell which is a primary battery. By the term nominal voltage, it means a prescribed value used as a criterion of voltage between terminals, which is obtained when a battery is used in an ordinary circumstance. The voltage between terminals is higher than the nominal voltage, when the battery is fully charged, and is lower than the nominal voltage, when discharging from the battery has taken place, or when a large current is supplied to a load.

Examples of a secondary battery 3 whose nominal voltage is higher than that of an air cell include: a lead storage battery, a valve-regulated lead storage battery, a lithium air battery, a lithium ion battery, a lithium polymer battery, a manganese dioxide lithium secondary battery, a titanium carbon lithium rechargeable battery, and the like.

Further, the nominal voltages of the lithium ion battery and the lithium polymer battery are 3.6V to 3.7V. Further, the nominal voltage of the manganese dioxide lithium secondary battery is 3.0V Further, the nominal voltage of the titanium carbon lithium rechargeable battery is 1.5V. Further, a range from the "discharge cut off voltage" and the "charge termination voltage" of the lithium ion battery is 2.7V to 4.2V. By the discharge cut off voltage, it means the minimum value of voltage at which safe discharging is possible. By the charge termination voltage, it means the maximum value of voltage at which safe charging is possible.

The secondary battery 3 is preferably a lithium ion battery. The nominal voltage of the lithium ion battery which falls within a range of 3.6V to 3.7V is higher than the nominal voltages of 1.2V to 1.4V of the air cell or a nickel-hydrogen secondary battery. Although the lithium ion battery exhibits a discharge characteristic such that its battery voltage drops from approximately 4.2V to approximately 2.7V, the lithium ion battery is able to drive a device longer than the air cell or the nickel-hydrogen secondary battery, because the energy density of the lithium ion battery is higher than that of the air cell or the nickel-hydrogen secondary battery.

### (Portable Device-Use Power Source Device 10: Power-Receiving Module 61)

The power-receiving module 61 has a power-receiving resonance coil 611 and a power-drawing coil 612. Example types of coils used as the power-receiving resonance coil 611 or the power-drawing coil 612 include: a spiral type, a solenoid type, and a loop type. For the power-receiving resonance coil 611 and the power-drawing coil 612, a copper wire material having an insulation coating is used.

### (Portable Device-Use Power Source Device 10: Circuit Board 63)

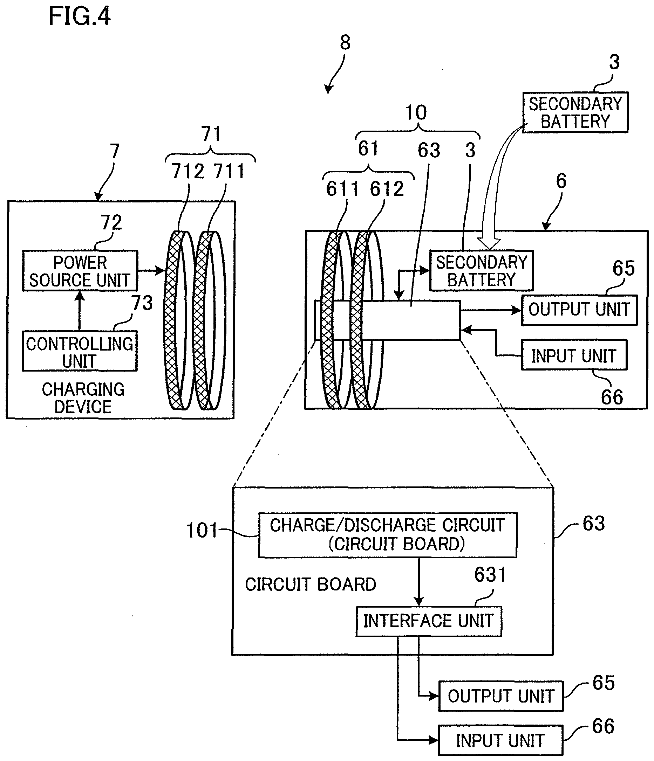

As shown in FIG. 4, the circuit board 63 has a charge/discharge circuit 101 and an interface unit 631 mounted thereon, and is connected to an output unit 65 and an input unit 66. The interface unit 631 has functions of: outputting control signals to the output unit 65; receiving input signals from the input unit 66; and processing various information and data according to the use of the drive units of the portable device 6.

The circuit board 63 including the charge/discharge circuit 101 and the interface unit 631 is at least partially arranged in a magnetic field space formed by a resonance phenomenon, whose magnetic field strength is smaller than the magnetic field strengths of the other parts (surrounding area). This allows an arrangement position for the charging circuit 8 to be easily ensured in a portable device-use power source device 10 with limited space for arranging components, and further enables downsizing of the portable device-use power source device 10. This way, the portable device-use power source device 10 restrains occurrence of an eddy current attributed to a magnetic field of the circuit board 63, thus preventing malfunctions and generating of heat of a predetermined temperature or higher, and further enables downsizing.

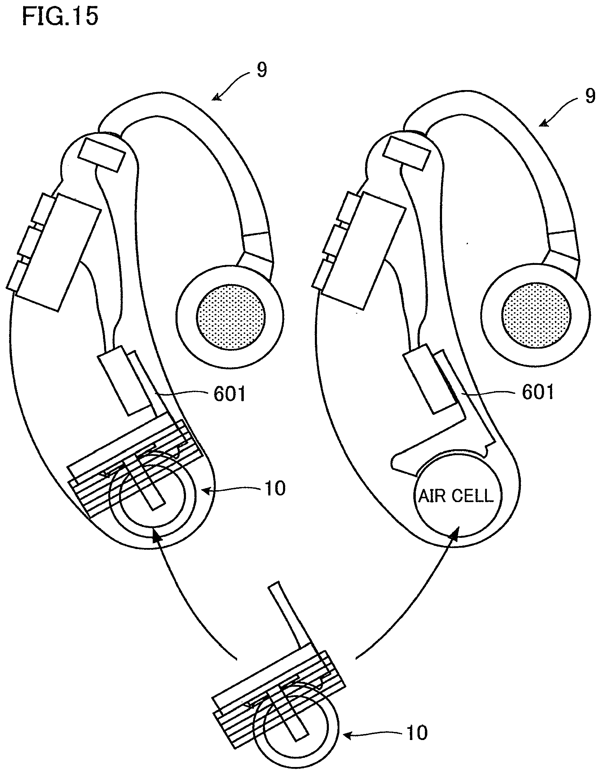

It should be noted that at least a part of the secondary battery 3 or at least a part of the output unit 65 and the input unit 66 may be in that "magnetic field space", in addition to or instead of the circuit board 63. Further, as shown in FIG. 1, the circuit board 63 may be a part of a support structure 601 for various components arranged inside the portable device 6. The support structure 601 has a terminal for various control signals, a GND terminal, a power source terminal and the like, and is provided with a detachable connector 662 and the like. The above structure in which the circuit board 63 substitutes for a part of the support structure 601 allows further downsizing and weight reduction of the portable device-use power source device 10. For example, as shown in FIG. 15, suppose the portable device 6 is a hearing aid such as an ear-hook hearing aid 9 and the like. A typical structure in such a case is such that a connection terminal provided to the support structure 601 contacts with an air cell. If the circuit board 63 of the portable device-use power source device 10 is a part of this support structure 601, it is possible to arrange the portable device-use power source device 10 in the position for arranging the air cell, without a significant change in the design of the internal structure of the hearing aid. In other words, a portion related to the air cell is easily replaced with the power source device for a portable device 10. This allows use of a secondary battery for already existing hearing aids which traditionally have been using an air cell. As a result, a hearing aid before or after shipping from its manufacturing plant or a hearing aid already owned by a user, which traditionally use an air cell, are converted at a low cost into a hearing aid that can use a rechargeable secondary battery 3.

### (Portable Device-Use Power Source Device 10: Charge/Discharge Circuit 101)

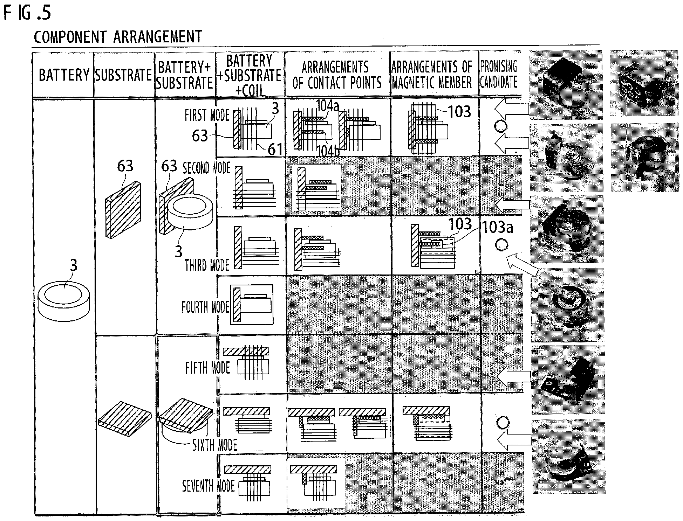

As shown in FIG. 5, the charge/discharge circuit 101 is mounted on the circuit board 63. The charge/discharge circuit 101 has a voltage-transformation circuit and a charging circuit. The voltage-transformation circuit is a circuit configured to execute a signal processing which converts the charged power of the secondary battery 3 into drive power for a drive unit and to output the converted power. As the voltage-transformation circuit, a linear regulator is adoptable for stepping down, and a switching regulator is adoptable for boosting and stepping down. An example of each regulator is one adopting a semiconductor elements so the current is switched on and off at a high speed.

As the charging circuit, an IC for a constant current/constant voltage linear charger is adopted. The IC for the charging circuit has functions such as a function of notifying that the charging current has been reduced to a predetermined setting value, a function of ending the charging using a timer, a function of stabilizing the charging current by means of thermal feedback, and a function of limiting the chip temperature in a high-power mode or in high ambient temperatures. It should be noted that the process of charging the secondary battery 3 may be divided into a predetermined number of steps, and a plurality of charging circuits may be provided to enable the most efficient charging in each of the steps. This way a highly efficient charging is possible.

### (Specific Structure of Portable Device-Use Power Source Device 10)

As shown in FIG. 1, the portable device-use power source device 10 has the secondary battery 3 in a detachable manner. The secondary battery 3 is a coin-shaped button cell, whose top surface is the negative pole and whose circumference and the bottom surface are the positive pole. A part of the secondary battery 3 is arranged on the inner circumference side of the annularly formed power-receiving module 61. On one end side of the power-receiving module 61 relative to its axial direction is provided a flat circuit board 63. A terminal surface of the circuit board 63, which is on the side of the power-receiving module 61, is provided with a first connection terminal 104a serving as the negative electrode and a second connection terminal 104b serving as the positive electrode. The first connection terminal 104a is able to abut the top surface of the secondary battery 3. The second connection terminal 104b on the other hand is able to abut the circumferential surface or the lower surface of the secondary battery 3.

### (Arrangement of Components in Portable device-use power source device 10)

Portable device-use power source device 10 is configurable in a plurality of ways with various combinations of the secondary battery 3, the circuit board 63, and the power-receiving module 61.

Specifically, as shown in FIG. 4, portable device-use power source devices 10 are classified into a first group and a second group. Those in the first group each has a structure in which the circumferential surface of the secondary battery 3 (i.e., the positive pole) faces the terminal surface of the circuit board 63. Those in the second group each has a structure in which the top surface of the secondary battery 3 (i.e., the negative pole) faces the terminal surface of the circuit board 63. The first group is further sorted into a first mode to a fourth mode, additionally including the power-receiving module 61.

### (Arrangement of Components in Portable device-use power source device 10: First Group)

In the first mode, there is a positional relation such that the axis of the power-receiving module 61 perpendicularly crosses the terminal surface of the circuit board 63 while perpendicularly crossing the axis of the secondary battery 3. In such a positional relation, a part of the secondary battery 3 and a part of the circuit board 63 are arranged on the inner circumference side of the power-receiving module 61. The expression "parallel" and "perpendicular" in each mode encompass errors in mounting. It should be noted that the first mode may be such that at least one of the secondary battery 3 and the circuit board 63 is partially or entirely arranged on the inner circumference side of the power-receiving module 61.

In the arrangement of the first connection terminal 104a and the second connection terminal 104b in the first mode, the first connection terminal 104a and the second connection terminal 104b protrude from the terminal surface of the circuit board 63. This way, the first connection terminal 104a contacts the top surface of the secondary battery 3, and the second connection terminal 104b contacts the circumferential surface of the secondary battery 3.

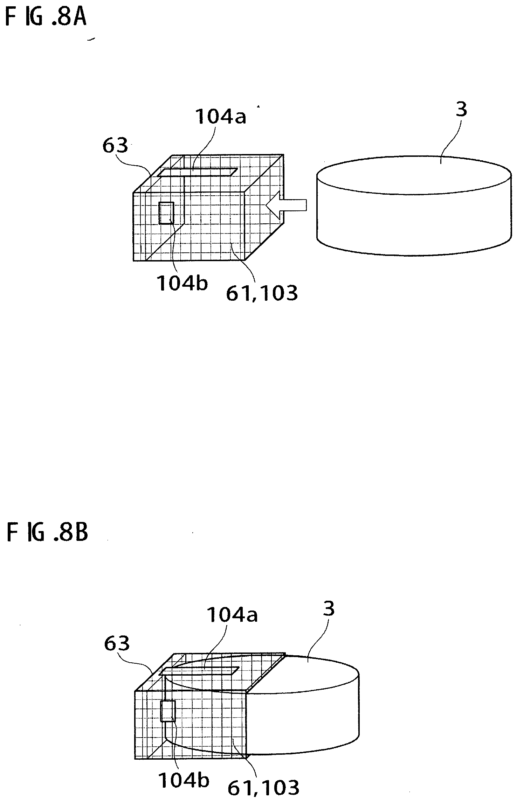

Further, the arrangement of terminals in the first mode may be structured as shown in FIG. 8A and FIG. 8B. Namely, the first connection terminal 104a protrudes from the terminal surface of the circuit board 63 while the second connection terminal 104b is arranged in a planar manner on the terminal surface of the circuit board 63. This way, the first connection terminal 104a contacts the top surface of the secondary battery 3, and the second connection terminal 104b contacts the circumferential surface of the secondary battery 3. It should be noted that FIG. 8A and FIG. 8B illustrates a magnetic member 103 provided on the inner circumference side of the power-receiving module 61.

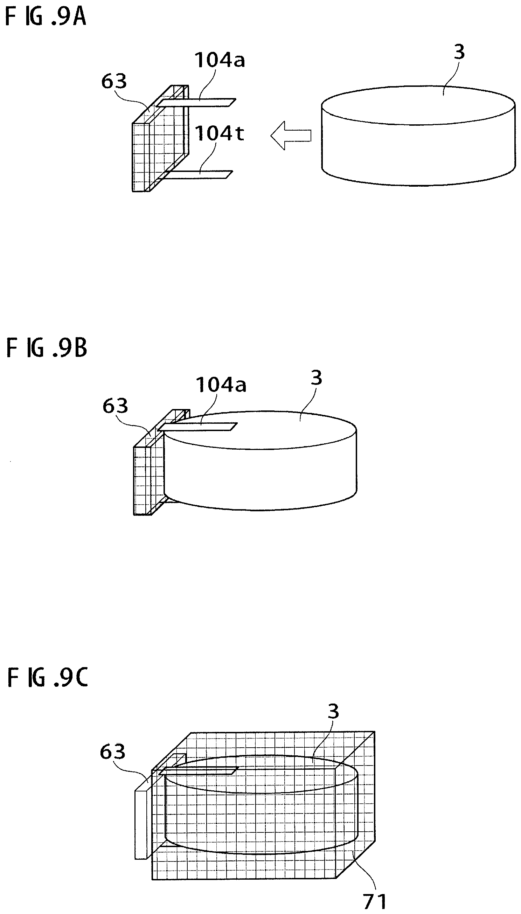

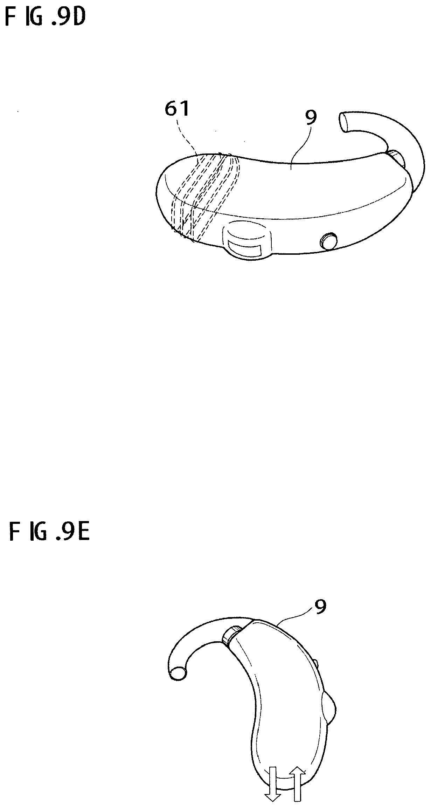

Further, the arrangement of terminals in the first mode may be structured as shown in FIG. 9A, FIG. 9B, and FIG. 9C. Namely, the first connection terminal 104a and the second connection terminal 104b protrude from the terminal surface of the circuit board 63. This way, the first connection terminal 104a contacts the top surface of the secondary battery 3, and the second connection terminal 104b contacts the lower surface of the secondary battery 3. This mode, as shown in FIG. 9D, allows arrangement of the power-receiving module 61 in a direction which crosses (e.g. perpendicularly crosses) the outline of a side surface of the ear-hook hearing aid 9. With this arrangement, it is possible to arrange the power-receiving module 61 in the same manner (the same angle and the tilt) for conducting charging, irrespective of whether the ear-hook hearing aid 9 is for the left ear or the right ear. It should be noted that the secondary battery 3 may be embedded in the bottom portion of the ear-hook hearing aid 9, or alternatively, the bottom portion of the ear-hook hearing aid 9 may be made as a cap-like structure, and the secondary battery is replaceable by opening and closing this cap-like structure, as shown in FIG. 9E. FIG. 9A, FIG. 9B, and FIG. 9C each shows a modification of the first mode, in which the magnetic member 103 and the power-receiving module 61 are arranged around the circuit board 63. The secondary battery 3 is placeable on the inner circumference side of the power-supplying module 71, while being placeable in the magnetic field space.

In the second mode, there is a positional relation such that the axis of the power-receiving module 61 is parallel to the terminal surface of the circuit board 63 while perpendicularly crossing the axis of the secondary battery 3. In such a positional relation, the secondary battery 3 and the circuit board 63 are partially arranged on the inner circumferential surface of the power-receiving module 61. In the arrangement of the first connection terminal 104a and the second connection terminal 104b in the second mode, the first connection terminal 104a and the second connection terminal 104b protrude from the terminal surface of the circuit board 63. This way, the first connection terminal 104a contacts the top surface of the secondary battery 3, and the second connection terminal 104b contacts a portion on the circumferential surface of the secondary battery 3, which is not covered by the power-receiving module 61.

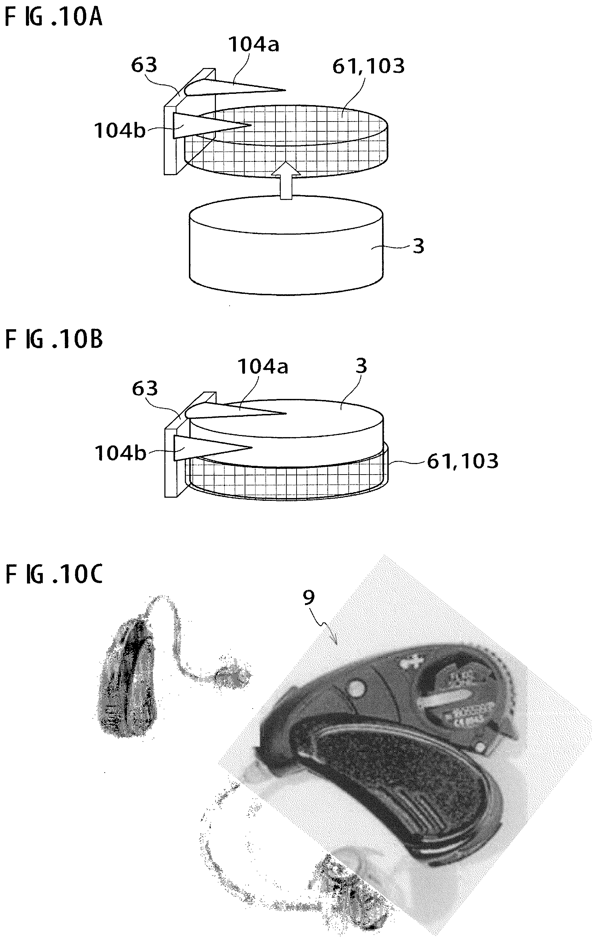

In the third mode, there is a positional relation such that the axis of the power-receiving module 61 is parallel to the terminal surface of the circuit board 63 while perpendicularly crossing the axis of the secondary battery 3. In such a positional relation, the secondary battery 3 is partially arranged on the inner circumferential surface of the power-receiving module 61, as shown in FIG. 10A and FIG. 10B. In the arrangement of the first connection terminal 104a and the second connection terminal 104b in the third mode, the first connection terminal 104a and the second connection terminal 104b protrude from the terminal surface of the circuit board 63. This way, the first connection terminal 104a contacts the top surface of the secondary battery 3, and the second connection terminal 104b contacts the circumferential surface of the secondary battery 3. Further, when the magnetic member 103 with a size that covers the entire circumferential surface of the secondary battery 3 is provided on the inner circumferential surface of the power-receiving module 61, an opening 103a is formed in a position of the magnetic member 103 where the second connection terminal 104b is arranged, and the second connection terminal 104b is brought into contact with the circumferential surface of the secondary battery 3 through this opening 103a. It should be noted that the above structure with the opening 103 a on the magnetic member 103 is preferable in actual implementation.

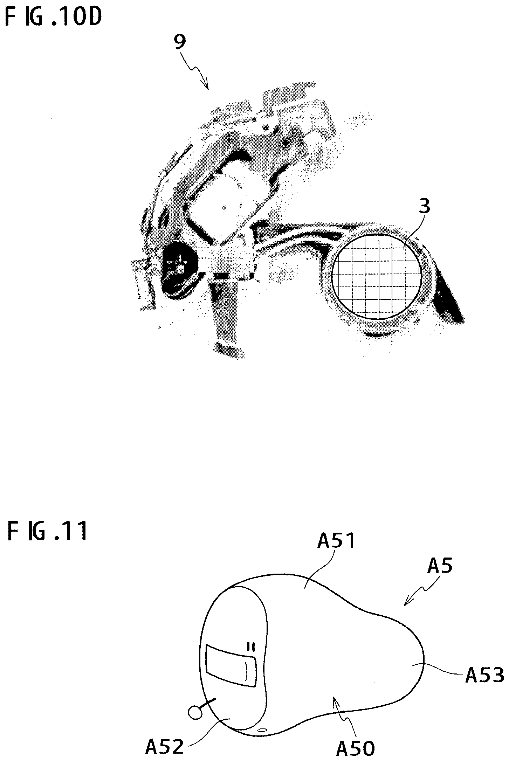

It is even more preferable that the first connection terminal 104a contacts the top surface of the secondary battery 3 and the second connection terminal 104b contacts the lower surface of the secondary battery 3, without the whole 103a on the magnetic member 103. It should be noted that in a structure in which the second connection terminal 104b is brought into contact with the lower surface of the secondary battery 3, influences to the coil characteristics and influences from heat generation attributed to the magnetic field on the power-transmission end are concerned, because the second connection terminal 104b is a metal. However, no significant influence was confirmed in experiments, due to the size of the second connection terminal 104b. In a structure in which the second connection terminal 104b contacts the lower surface of the secondary battery 3, the first connection terminal 104a and the second connection terminal 104b at the top and bottom sandwiches the secondary battery 3. This structure may be modified as shown in FIG. 10D so that the structure can be applied to a portable device 6 with replaceable battery.

In the third mode, the secondary battery 3 may be embedded into the bottom portion of the ear-hook hearing aid 9, or alternatively, the casing of the ear-hook hearing aid 9 may be separable so that the battery is replaceable. For example, it is possible to structure as shown in FIG. 10C. Namely, with the top portion of the ear-hook hearing aid 9 as the center of rotation, one side of the casing is made slidable with respect to the other side, so that the other side of the casing is opened to enable replacement of the secondary battery 3. Further, for example, it is possible to structure as shown in FIG. 10D. Namely, a part of the casing of the ear-hook hearing aid 9 is formed as a battery holder for the secondary battery 3, and this battery holder is made slidable. This way, the secondary battery 3 is replaceable at a position apart from the circuit board 63.

In the fourth mode, there is a positional relation such that the axis of the power-receiving module 61 is parallel to the terminal surface of the circuit board 63 while perpendicularly crossing the axis of the secondary battery 3. In such a positional relation, the secondary battery 3 and the circuit board 63 are arranged on the inner circumferential surface of the power-receiving module 61.

Further, the second group, in which the top surface of the secondary battery 3 and the terminal surface of the circuit board 63 abut each other, is further classified into a fifth mode and a sixth mode when the power-receiving module 61 is added.

In the fifth mode, there is a positional relation such that the axis of the power-receiving module 61 is parallel to the terminal surface of the circuit board 63 while perpendicularly crossing the axis of the secondary battery 3. In such a positional relation, the secondary battery 3 and the circuit board 63 are arranged on the inner circumferential surface of the power-receiving module 61.

In the sixth mode, there is a positional relation such that the axis of the power-receiving module 61 perpendicularly crosses the terminal surface of the circuit board 63 while being parallel to the axis of the secondary battery 3. In such a positional relation, the secondary battery 3 is arranged on the inner circumferential surface of the power-receiving module 61. In the arrangement of the first connection terminal 104a and the second connection terminal 104b in the sixth mode, the first connection terminal 104a is arranged in a planar manner on the terminal surface of the circuit board 63 while the second connection terminal 104b protrude from the terminal surface of the circuit board 63. This way, the first connection terminal 104a contacts the top surface of the secondary battery 3, and the second connection terminal 104b contacts the circumferential surface of the secondary battery 3. It should be noted that, in the arrangement of terminals in the sixth mode, the power-receiving module 61 may be separated from the circuit board 63 and the second connection terminal 104b may be brought into contact with a part of the circumferential surface of the secondary battery 3 in a gap between the power-receiving module 61 and the circuit board 63. Alternatively, in the arrangement of terminals in the sixth mode, the power-receiving module 61 may be abutted against the circuit board 63 and the second connection terminal 104b may be brought into contact with the circumferential surface of the secondary battery 3 which is on the other side of the circuit board 63.

In cases where an opening 103a with a size that covers the entire circumferential surface of the secondary battery 3 is provided on the inner circumferential surface of the power-receiving module 61, a notch is formed in a part of the magnetic member 103, and the second connection terminal 104b is brought into contact with the circumferential surface of the secondary battery 3 through this notch. It should be noted that the above structure with the opening 103a on the magnetic member 103 is preferable in actual implementation.

In the seventh mode, there is a positional relation such that the axis of the power-receiving module 61 is parallel to the terminal surface of the circuit board 63 and parallel to the axis of the secondary battery 3. In such a positional relation, the secondary battery 3 is arranged on the inner circumferential surface of the power-receiving module 61. In the arrangement of the first connection terminal 104a and the second connection terminal 104b in the seventh mode, the first connection terminal 104a is arranged in a planar manner on the terminal surface of the circuit board 63 while the second connection terminal 104b protrude from the terminal surface of the circuit board 63. This way, the first connection terminal 104a contacts the top surface of the secondary battery 3 which is not covered by the power-receiving module 61, and the second connection terminal 104b contacts the circumferential surface of the secondary battery 3 which is not covered by the power-receiving module 61.

It should be noted that the first connection terminal 104a and the second connection terminal 104b are used as electrodes to contact a coin-shaped secondary battery 3 in the present embodiment; however, the present invention is not limited to this. For example, an electrode may be welded to a coin-shaped secondary battery 3 and a lead wire may be drown out therefrom to be connected to the circuit board 63.

### (Portable Device-Use Power Source Device 10: Space Portion with Weak Magnetic Field)

The following details a space portion with a weak magnetic field, which is a position for arranging the circuit board 63 and the like.

As shown in FIG. 1, the portable device-use power source device 10 is configured to form a space portion with a small magnetic field in a given portion. The formation of the space portion at the desired position is realized by setting power supply conditions such as a positional relation with the charging device 7, a power-supplying state, and an internal structure.

For example, the portable device-use power source device 10 may be arranged such that, when power is supplied by the resonance phenomenon from the power-supplying resonance coil 711 of the power-supplying module 71 of the charging device 7 to the power-receiving resonance coil 611 of the power-receiving module 61, a magnetic field space having a magnetic field strength lower than the magnetic field strengths in parts other than the desired position is formed as the space portion, at a desired position between the power-supplying resonance coil 711 of the power-supplying module 71 and the power-receiving resonance coil 611 of the power-receiving module 61. In this case, the space portion is created in a position nearby the power-receiving module 61, closer to the charging device 7. Therefore, the leading end portion side of the outer wall member is ensured as the position for arranging the circuit board 63 and the like, by slightly shifting towards back side the position for arranging the power-receiving module 61 from the leading end portion of the outer wall member on the side of the charging device 7.

A method of forming the space portion will be detailed. When power is supplied from the power-supplying resonance coil 711 of the power-supplying module 71 of the charging device 7 to the power-receiving resonance coil 611 of the power-receiving module 61 by the resonance phenomenon, for example, the frequency of the power supplied to the power-supplying resonance coil 711 of the power-supplying module 71 is set in such a way that the direction of the current flowing in the power-supplying resonance coil 711 of the power-supplying module 71 is opposite to the direction of the current flowing in the power-receiving resonance coil 611 of the power-receiving module 61.

In the formation method above, when power transmission using the resonance phenomenon is performed, the coupling coefficient indicating the strength of the coupling between the power-supplying resonance coil 711 and the power-receiving resonance coil 611 is increased as the power-supplying resonance coil 711 of the power-supplying module 71 and the power-receiving resonance coil 611 of the power-receiving module 61 are disposed to be close to each other. When a transmission characteristic "S21" (which is an index of the power transmission efficiency in the power transmission from the power-supplying resonance coil 711 to the power-receiving resonance coil 611) is measured while the coupling coefficient is high as above, the analyzed waveform of the transmission characteristic "S21" has separate peaks; one on a low frequency side and another on a high frequency side. As the frequency of the power supplied to the power-supplying resonance coil 711 is set at a frequency around the peak on the high frequency side, the direction of the current flowing in the power-supplying resonance coil 711 is arranged to be opposite to the direction of the current flowing in the power-receiving resonance coil 611, and hence the magnetic field generated on the inner circumference side of the power-supplying resonance coil 711 and the magnetic field generated on the inner circumference side of the power-receiving resonance coil 611 cancel each other out, with the result that an influence of the magnetic field is reduced on the inner circumference sides of the power-supplying resonance coil 711 and the power-receiving resonance coil 611. With this, the magnetic field space having a magnetic field strength lower than the magnetic field strengths in parts other than the inner circumference sides of the power-supplying resonance coil 711 and the power-receiving resonance coil 611 is formed as the space portion.

In another method of forming the space portion, for example, when power is supplied from the power-supplying resonance coil 711 to the power-receiving resonance coil 611 by the resonance phenomenon, the frequency of the power supplied to the power-supplying resonance coil 711 is set so that the direction of the current flowing in the power-supplying resonance coil 711 is identical with the direction of the current flowing in the power-receiving resonance coil 611.

According to the method above, when power transmission using the resonance phenomenon is performed, the coupling coefficient indicating the strength of the coupling between the power-supplying resonance coil 711 and the power-receiving resonance coil 611 is increased as the power-supplying resonance coil 711 and the power-receiving resonance coil 611 are disposed to be close to each other. When the coupling coefficient is high in this manner, the measurement of the transmission characteristic shows that a measured waveform has two separated peaks on the low frequency side and the high frequency side, respectively. As the frequency of the power supplied to the power-supplying resonance coil 711 is set at a frequency around the peak on the low frequency side, the direction of the current flowing in the power-supplying resonance coil 711 is arranged to be identical with the direction of the current flowing in the power-receiving resonance coil 611, and hence the magnetic field generated on the outer circumference side of the power-supplying resonance coil 711 and the magnetic field generated on the outer circumference side of the power-receiving resonance coil 611 cancel each other out, with the result that an influence of the magnetic field is reduced on the outer circumference sides of the power-supplying resonance coil 711 and the power-receiving resonance coil 611. With this, a magnetic field space having a magnetic field strength lower than the magnetic field strengths in parts other than the outer circumference sides of the power-supplying resonance coil 711 and the power-receiving resonance coil 611 is formed as the space portion.

In addition to the above, the size of the space portion may be set based on the strength of the magnetic coupling between the power-supplying resonance coil 711 and the power-receiving resonance coil 611, by changing adjustment parameters regarding the power-supplying resonance coil 711 and the power-receiving resonance coil 611. For example, the size of the magnetic field space is increased by relatively weakening the magnetic coupling between the power-supplying resonance coil 711 and the power-receiving resonance coil 611. In the meanwhile, the size of the magnetic field space is decreased by relatively strengthening the magnetic coupling between the power-supplying resonance coil 711 and the power-receiving resonance coil 611. As such, a space portion optimum for the size of a portable device-use power source device 10 or portable device 6 to be mounted is formed.

Alternatively, the size of the magnetic field space may be changed in such a way that the arrangement relation of the power-supplying resonance coil 711 and the arrangement relation of the power-receiving resonance coil 611 are used as the adjustment parameters, and the adjustment parameters are changed to change the strength of the magnetic coupling between the power-supplying resonance coil 711 and the power-receiving resonance coil 611.

Furthermore, the shape of the space portion may be arranged to be a desired shape in such a way that the shapes of the power-supplying resonance coil 711 and the power-receiving resonance coil 611 are used as the adjustment parameters, and the shapes of these coils are changed in a desirable manner to change the strength of the magnetic coupling between and around the power-supplying resonance coil 711 and the power-receiving resonance coil 611. In this case, as the power-supplying resonance coil 711 and the power-receiving resonance coil 611 are arranged to have desired shapes, a magnetic field space having a relatively low magnetic field strength is formed with a desired shape corresponding to the shapes of the coils.

In addition to the above, the size of the space portion may be set in such a way that at least one of the first distance between the power-supplying resonance coil 711 and the power-supplying coil 712 and the second distance between the power-drawing coil 612 and the power-receiving resonance coil 611 is used as an adjustment parameter, and the size is set based on this adjustment parameter. For example, the size of the magnetic field space is increased in such a way that the first distance between the power-supplying resonance coil 711 and the power-supplying coil 712 and the second distance between the power-drawing coil 612 and the power-receiving resonance coil 611 are relatively shortened so that the magnetic coupling is relatively weakened. In the meanwhile, the size of the magnetic field space is decreased in such a way that the first distance between the power-supplying resonance coil 711 and the power-supplying coil 712 and the second distance between the power-drawing coil 612 and the power-receiving resonance coil 611 are relatively elongated so that the magnetic coupling is relatively strengthened.

In addition to the above, the magnetic field space may be formed as the space portion at a desired position with a magnetic field strength lower than the magnetic field strengths in parts other than the desired position, in such a manner that, the magnetic member 103 is provided to cover at least a part of the power-receiving resonance coil 611 and the power-supplying resonance coil 711 except the surfaces where these coils oppose each other, and power transmission is carried out by changing the magnetic field between the power-supplying resonance coil 711 and the power-receiving resonance coil 611. For example, the magnetic member 103 may be provided to cover the inner circumferential surface of the power-receiving resonance coil 611. In this case, by blocking the magnetic field generated on the inner circumference side of the power-receiving resonance coil 611, a magnetic field space having a relatively low magnetic field strength is formed as the space portion on the inner circumference side of the power-receiving resonance coil 611.

In addition to the above, the magnetic member 103 may be provided to cover the surfaces of the power-supplying resonance coil 711 and the power-receiving resonance coil 611, which surfaces are opposite to the surfaces where the coils oppose each other. In this case, by blocking the magnetic field generated at around the surface opposite to the opposing surface of the power-receiving resonance coil 611, a magnetic field space having a relatively low magnetic field strength is formed as the space portion at around the surface opposite to the opposing surface of the power-receiving resonance coil 611.

As such, the portable device-use power source device 10 is arranged such that, based on one or more combination of at least one of the above-described methods of forming the space portion, a magnetic field space having a low magnetic field strength can be intentionally formed at will as the space portion at and around the inner side of the power-receiving module 61, and the size and shape of the space portion can be arbitrarily set. In other words, in the portable device-use power source device 10, a desired space portion can be formed by adjusting the layout of the power-receiving module 61.

### (Portable Device-Use Power Source Device 10: Load Fluctuation Characteristic)

The following details a load fluctuation characteristic of the portable device-use power source device 10. A load fluctuation characteristic is variation in the input impedance to the portable device-use power source device 10 with respect to a charging time of the constant voltage charging.

Any of coupling coefficients of the power-supplying module 71 and the power-receiving module 61 in the portable device-use power source device 10 is preferably set so that the input impedance related to the load fluctuation characteristic rises when power is supplied, by varying a magnetic field, from the power-supplying module 71 to the power-receiving module 61 of the portable device-use power source device 10 including a secondary battery 3 chargeable by a constant current/constant voltage charging system. This structure automatically restrains an input of an excessive external power at a time of transition from the constant current charging to the constant voltage charging, without a need of separately providing an impedance matching box. As the result, for example, downsizing by the amount of eliminating the impedance matching box becomes possible. Alternatively, it is possible to double-restrain the external power: a forced restraint of the external power by the impedance matching box, and an automatic restraint of the external power by the load fluctuation characteristic.

The part of the above description reading "any of coupling coefficients of the power-supplying module 71 and the power-receiving module 61" means at least one of the following coupling coefficients: a coupling coefficient between the power-supplying coil 712 and the power-supplying resonance coil 711; a coupling coefficient between the power-supplying resonance coil 711 and the power-receiving resonance coil 611; and a coupling coefficient between the power-receiving resonance coil 611 and the power-drawing coil 612.

It should be noted that values of the coupling coefficient between the power-supplying coil 712 and the power-supplying resonance coil 711, the coupling coefficient between the power-supplying resonance coil 711 and the power-receiving resonance coil 611, and the coupling coefficient between the power-receiving resonance coil 611 and the power-drawing coil 612 may be adjusted by varying the distance between the power-supplying coil 712 and the power-supplying resonance coil 711, the distance between the power-supplying resonance coil 711 and the power-receiving resonance coil 611, and the distance between the power-receiving resonance coil 611 and the power-drawing coil 612, respectively. This allows adjustment of the load fluctuation characteristic by a simple work of adjusting a distance between coils as a parameter.

Further, the "any of coupling coefficients of the power-supplying module 71 and the power-receiving module 61" may be set by adjusting a drive frequency, in cases where the power-supplying module 71 and the power-receiving module 61 are set so that a value of transmission characteristic with respect to a drive frequency of the power supplied to the power-supplying module 71 has a double-hump characteristic having a peak in a lower drive frequency band than a resonance frequency in the power-supplying module 71 and the power-receiving module 61, and a peak in a higher drive frequency band than the resonance frequency.

Specifically, the drive frequency of the power supplied to the power-supplying module 71 is set to a band corresponding to a peak value of the transmission characteristic, which occurs in a drive frequency band lower than the resonance frequency of the power-supplying module 71 and the power-receiving module 61 or a band corresponding to a peak value of the transmission characteristic, which occurs in a drive frequency band higher than the resonance frequency of the power-supplying module 71 and the power-receiving module 61, so that the input impedance of the portable device-use power source device 10 in the constant voltage charging tends to increase.

### (Example Application of Portable Device-Use Power Source Device 10: Portable Device 6)

The following specifically describes an example application of the portable device-use power source device 10 to a portable device 6.

As shown in FIG. 4, the portable device 6 includes a portable device-use power source device 10, a speaker and/or a light emitter, an output unit 65 (drive unit) such as a display, an input unit 66 (drive unit) such as a microphone and/or a switch. The portable device 6 encompasses a handheld device which can be carried on a hand and a human-wearable device which can be worn a human body. Specific examples of the portable device 6 include a portable computer (a laptop PC, a note PC, a tablet PC, or the like), a camera, an audio visual device (a portable music player, an IC recorder, a portable DVD player, or the like), a calculator (such as a pocket computer and an electronic calculator), a game console, a computer peripheral (a portable printer, a portable scanner, a portable modem, or the like), a dedicated information device (an electronic dictionary, an electronic notebook, an electronic book, a portable data terminal, or the like), a portable communication terminal, a voice communication terminal (a portable phone, a PHS, a satellite phone, a third party radio system, an amateur radio, a specified low power radio, a personal radio, a citizen radio, or the like), a data communication terminal (a portable phone, a PHS (a feature phone and a smart phone), a pager, or the like), a broadcasting receiver (a television receiver and a radio), a portable radio, a portable television receiver, a one-seg receiver, another type of device (a wristwatch and a pocket watch), a hearing aid, a handheld GPS, a security buzzer, a flashlight/pen light, a battery pack, and the like. Examples of the above hearing aid include an ear-hook hearing aid, an ear hole fitting hearing aid, and a glasses-type hearing aid.

A human-wearable device with a portable device-use power source device 10 built therein enables downsizing of a human-wearable device as a portable device 6, and downsizing the portable device-use power source device 10 improves the degree of freedom in the shape and size of the human-wearable device, which contributes to reduction of burdens in manufacturing such a device in a shape and size that fit to the physique and body shape of a user.

### (Example Application of Portable Device-Use Power Source Device 10: Ear-Hook Hearing Aid 9)

The following details a case where the portable device 6 is a hearing aid, with an example of an ear-hook hearing aid 9. A hearing aid with a portable device-use power source device 10 built therein enables downsizing of a human-wearable device as a portable device 6, and downsizing the portable device-use power source device 10 improves the degree of freedom in the shape and size of the hearing aid, which contributes to reduction of burdens in manufacturing the hearing aid in a shape that fits to the shape of the ear of a user.

As shown in FIG. 1, the ear-hook hearing aid 9 includes: a hearing aid main body 91 configured to be worn on an auricle, and a portable device-use power source device 10 disposed at the bottom portion of the hearing aid main body 91. The axis of the power-receiving module 61 in the portable device-use power source device 10 matches with a direction from the bottom portion to the top portion of the hearing aid main body 91.

The ear-hook hearing aid 9 further includes an ear mold 92 to be worn at or nearby an ear hole opening, a connecting member 93 connecting the hearing aid main body 91 and the ear mold 92, a circuit board 63, and the output unit 65 and the input unit 66 shown in FIG. 4, which are connected to the circuit board 63. The output unit 65 is a speaker 651 and the like which outputs a sound. Further, the input unit 66 is an operation button 661 for controlling the sound level, on and off of the power, a sound collecting microphone which converts external sounds to electric sound signals, and the like.

The hearing aid main body 91 has a hexahedral housing (outer wall member) which is curved from the top portion to the bottom portion so as to fit the root of the pinna. That is, the housing of the hearing aid main body 91 includes: a top surface portion 911d positioned in the top portion; a bottom surface portion 911c positioned in the bottom portion; a head-contacting surface portion 911 a to contact the head; a pinna-contacting surface portion 911e opposing the head-contacting surface portion 911 a, which contacts the pinna; an inside contacting surface portion 911b which contacts the root of the pinna in a surface-to-surface manner; an outside surface portion 911f on the opposite side of the inside contacting surface portion 911 b. Further, the hearing aid main body 91 can be divided into two at the head-contacting surface portion 911 a and the pinna-contacting surface portion. This way, the head-contacting surface portion 911 a serves as a cap, and the pinna-contacting surface portion is an accommodated body.

To the top surface portion of the hearing aid main body 91 is connected an end portion of the connecting member 93. The connecting member 93 is formed as a tubular manner. The other end of the connecting member 93 is connected to the other end portion the ear mold 92. With the above described ear-hook hearing aid 9, the sounds collected and amplified by the hearing aid main body 91 is output from the speaker 651 to the ear mold 92 via the connecting member 93, thereby making the sounds clearly audible to the user of the ear-hanging hearing aid 9.

### (Charging Device 7 of Portable Device-Use Power Source Device 10)

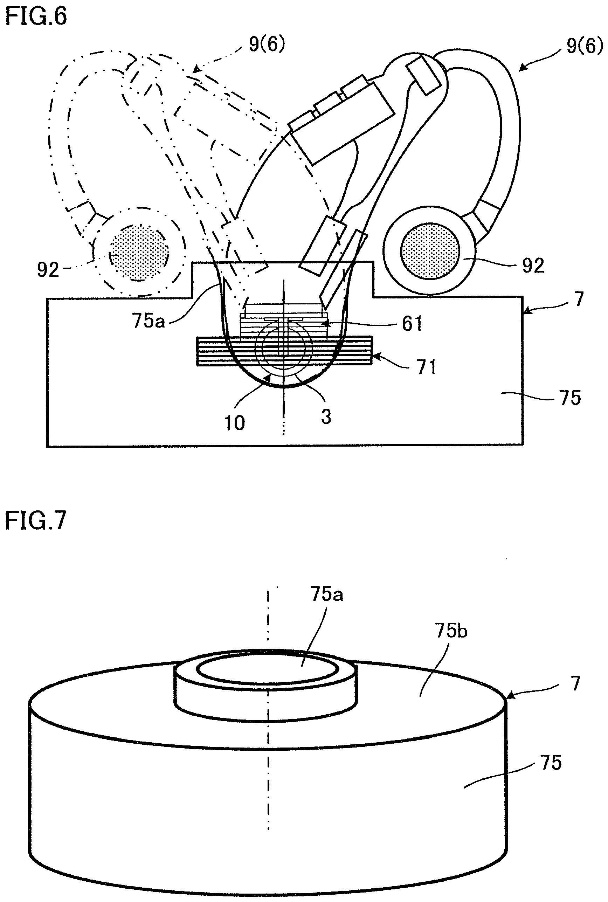

The ear-hook hearing aid 9 is attachable and detachable to/from the charging device 7. As shown in FIG. 6 and FIG. 7, the charging device 7 includes a casing 75 which allows the ear-hook hearing aid 9 to be placed thereon. The casing 75 has a cylindrical shape. In a center portion on the top surface of the casing 75 is formed a recess 75a in which a bottom portion of the ear-hook hearing aid 9 is accommodated. Around the recess 75a is a support 75b formed to abut the ear mold 92 of the ear-hook hearing aid 9, accommodated in the recess 75a. The support 75b is formed so that a line from the bottom portion to the top portion of the hearing aid main body 91, while the ear-hook hearing aid 9 is placed on the charging device 7, is maintained constant with respect to the surface of the support 75b of the charging device 7. That is, the charging device 7 maintains a constant of the axis of the power-receiving module 61 in the ear-hook hearing aid 9 with respect to the surface of the support 75b. It should be noted that the angle of the axis of the power-receiving module 61 is preferably perpendicular.

Inside the charging device 7 is provided a power-supplying module 71 configured to supply power, by a resonance phenomenon, to the ear-hook hearing aid 9 placed on the charging pedestal. The power-supplying module 71 is set so its axis matches with that of the power-receiving module 61. The power-supplying module 71 includes a power-supplying resonance coil 711 and a power-supplying coil 712. Example types of coils used as the power-supplying resonance coil 711 or the power-supplying coil 712 include: a spiral type, a solenoid type, and a loop type. The charging device 7 includes a power source unit 72 supplying AC power to the power-supplying module 71 and a controlling unit 73 controlling the power source unit 72.

The charging device 7, as is the case with portable device-use power source device 10 of the ear-hook hearing aid 9, may have a structure which creates a space portion with a weak magnetic field in an inner side position of or a position nearby the power-supplying module 71, when power is supplied by utilizing a resonance phenomenon. This space portion may be used as a position for arranging the power source unit 72 and the controlling unit 73. This allows downsizing of the charging device 7 in addition to the ear-hook hearing aid 9.

As described, the charging device 7 allows an ear-hook hearing aid 9 to be placed thereon, and is configured to supply external power to the portable device-use power source device 10 of the ear-hook hearing aid 9. Such a charging device 7 includes a power-supplying module 71 including a power-supplying resonance coil 711 and a power-supplying coil 712, which is configured to supply power by a resonance phenomenon to the power-receiving module 61, and a casing 75 formed so that, while the ear-hook hearing aid 9 is attached, the power-supplying module 71 and the power-receiving module 61 are in a positional relation such that their coil axes matches with each other. It should be noted that the ear-hook hearing aid 9 is no more than an example and the same may apply to any given portable device 6.

The casing 75 is formed so that, when the ear-hook hearing aid 9 is attached, the power-supplying module 71 and the power-receiving module 61 are in a positional relation such that their coil axes match with each other. This enables charging as intended in the design, with respect to the portable device-use power source device 10, simply by placing the ear-hook hearing aid 9 on the charging device 7. There is no need of warning the user regarding how the ear-hook hearing aid 9 should be placed on the casing 75; i.e., the tilt angle and the rotational angle of the tilt axis of the ear-hook hearing aid 9 with respect to the surface of the support 75b (contact surface) of the casing 75.

### (Example Application of Portable Device-Use Power Source Device 10: Ear Hole Fitting Hearing Aid A5)

As shown in FIG. 11, an ear hole fitting hearing aid A5 includes a housing A50 having a cylindrical shell part A51 configured to abut a surface of an external auditory canal in a hear hole, a face plate part A52 arranged on the pinna side of the shell part A51, a leading end part A53 arranged on the inner ear side of the shell part A51. The face plate part A52 functions as a cap of the casing A50 which opens and closes, and functions as a holding unit configured to hold the portable device-use power source device 10. With this structure, the portable device-use power source device 10 is taken out at the same time the face plate part A52 is detached from the casing A50. Further, the circuit board 63 of the portable device-use power source device 10 is formed as a part of a support structure for various components arranged inside the casing A50.

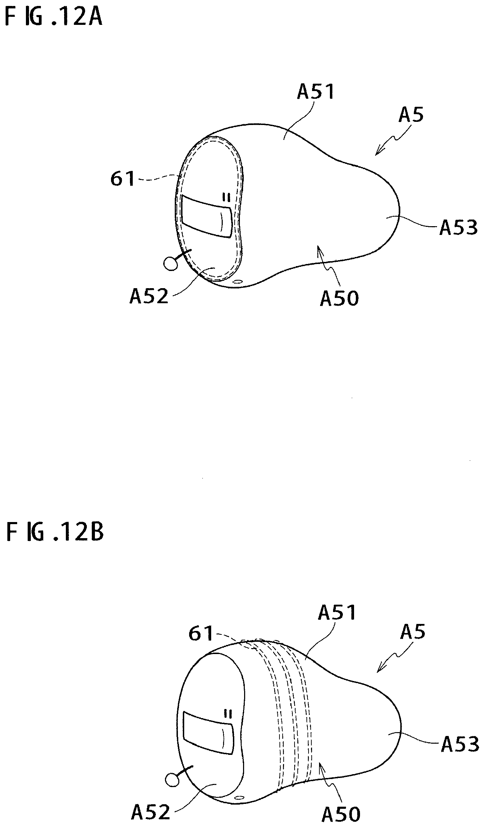

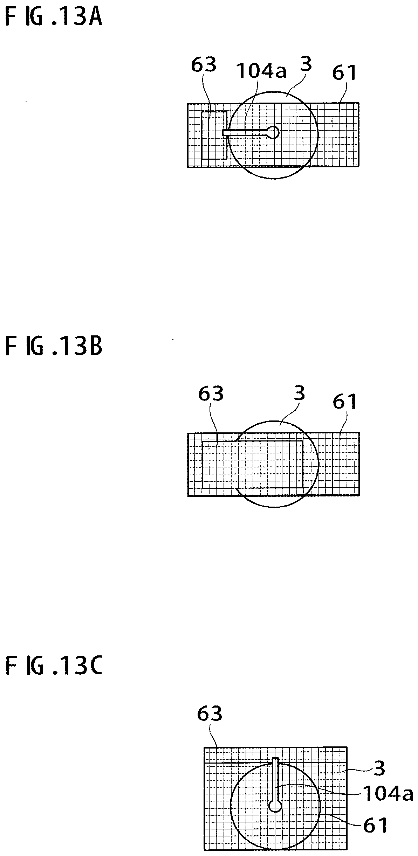

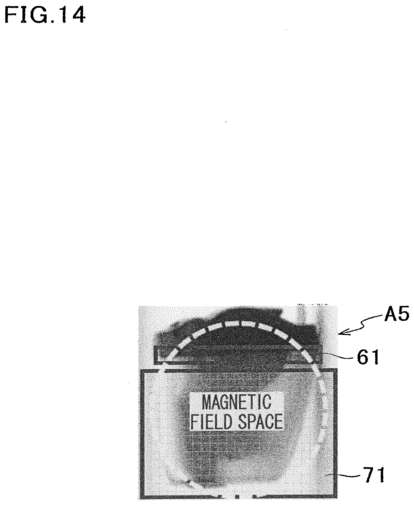

As shown in FIG. 12A, in the ear hole fitting hearing aid A5, the power-receiving module 61 may be integrally formed with the face plate part A52 along the outline of the face plate part A52. Alternatively, the power-receiving module 61 may be integrally formed with the shell part A51, as shown in FIG. 12B. These structures are achieved by adopting the portable device-use power source device 10 with the arrangement of components of the first mode shown in FIG. 13A, the portable device-use power source device 10 with the arrangement of components of the second mode shown in FIG. 13B, or the portable device-use power source device 10 with the arrangement of components of the third mode shown in FIG. 13C. Further, as shown in FIG. 14, in cases where the power-supplying module 71 is arranged so as to surround the power-receiving module 61 of the ear hole fitting hearing aid A5, the magnetic field space indicated by a broken line is preferably formed so as to accommodate the entire ear hole fitting hearing aid A5.

Although the above descriptions have been provided with regard to the characteristic parts so as to understand the invention more easily, the invention is not limited to the embodiment as described above and can be applied to the other embodiments and the applicable scope should be construed as broadly as possible. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. In addition, it is required to sufficiently refer to the documents that have been already disclosed, so as to fully understand the objects and effects of the present invention.

### Reference Signs List

3. Secondary battery
6. Portable device
7. Charging device
9. Ear-hook hearing aid
10. Portable device-use power source device for a portable device
61. Power-receiving module
63. Circuit board
104a. First connection terminal
104b. Second connection terminal
601. Support structure

## Claims

1. A power source device for a portable device, comprising:
a secondary battery;
a circuit board on which a charging circuit is mounted, the charging circuit configured to charge the secondary battery with an input of external power; and
a power-receiving module having a power-receiving resonance coil and a power-drawing coil, which are configured to receive power supplied from outside by a resonance phenomenon and output to the charging circuit as the external power,
wherein at least one of the circuit board and the secondary battery is at least partially arranged on an inner circumference side of the power-receiving resonance coil and the power-drawing coil in the power-receiving module.

2. The power source device for a portable device according to claim 1, wherein the circuit board is at least partially arranged in a magnetic field space formed by the resonance phenomenon, the magnetic field space having a smaller magnetic field strength than that in other portions.

3. The power source device for a portable device according to claim 1 or 2, wherein the circuit board is a part of a support structure for various components arranged inside the power source device for a portable device.

4. The power source device for a portable device according to any one of claims 1 to 3, wherein the power-receiving module is configured to hold the secondary battery in a detachable manner.

5. A portable device comprising the power source device for a portable device, according to any one of claims 1 to 4.

6. The portable device according to claim 5, wherein the portable device is a human wearable device.

7. The portable device according to claim 5, wherein the portable device is a hearing aid wearable on an ear.

8. A charging device which is attachable to the portable device according to any one of claims 5 to 7, the charging device configured to supply external power to the power source device for the portable device attached, comprising:
a power-supplying module configured to supply power to the power-receiving module by using a resonance phenomenon, the power-supplying module including a power-supplying resonance coil and a power-supplying coil; and
a casing formed so that, while the portable device is attached, the power-supplying module and the power-receiving module are in a positional relation such that their coil axes match with each other.
